# EUROPEAN PATENT APPLICATION

(11) **EP 1 489 499 A1**
(43) Date of publication of application: **22.12.2004**
(21) Application number: 03291507.6
(22) Date of filing: 20.06.2003
(51) Int. Cl.: G06F 9/445

(54) **Tool and associated method for use in managed support for electronic devices**

(71) Applicant: Hewlett-Packard Development Company, L.P., Houston, TX 77070 (US)
(72) Inventor: Besson, Fabrice, 38700 Le Sappey en Chartreuse (FR); Yvraut, Gerard, 38190 Bernin (FR)
(74) Representative: Lloyd, Richard Graham

(57) **Abstract**

A component management service (10) provides component management for a client computer system (12) formed of a plurality of computers (14) and a plurality of peripheral devices (16). The service (10) collects together information regarding defects and updates of components of the system (12), compares these with a list of the components of the system and notifies the system administrator (18) whether any of the components of the system require modification to correct for defects or to implement updates. The system operates automatically and thereby facilitates significantly the management of large computer systems.

## Description

### Field of the Invention:

The present invention relates to tools, and associated methods, for providing a managed support service for electronic devices, in the preferred embodiment a system of computers and peripherals thereto.

### Background of the Invention:

As the computer systems of some organisations become larger, the management of the many different components in the system becomes more and more difficult. Typically, the person or department in charge of managing the system must seek to maintain the reliability of all the components of the system. For example, any defects in the components which come to light, such as from manufacturers' press releases, identified software problems such as bugs, updates to software or firmware and so on, must be dealt with as necessary.

It is known to provide a component management service in which a third party provider collects data relating to defects identified in certain versions of software or firmware, in hardware components and data relating to updates of software and firmware. The service then publishes ordered lists of the collected data which are provided to client organisations. Upon receipt of this data, the person responsible in the client organisation determines whether any of the components of their system are listed and then determines from the list what action should be taken to correct the notified defect or to provide the required update. For example, where a component requires replacement, repair or updating, this is effected as appropriate.

Such a system management service can work reasonably well for systems formed of a relatively modest number of components. However, for larger systems, management of the components of the system becomes very complex, with the result that to date larger systems are sometimes managed poorly or not at all, leading to the risk of premature malfunction of one or more components of the system. As some systems now have thousands and sometimes hundreds of thousands of components, this problem can be acute.

It is estimated that the time required to check each individual component of a system, by an experienced person, is between 10 to 15 minutes per component. Therefore, it can take around 250 man hours per 1000 component. This is clearly a difficult and time consuming task for any large system, even when a team of people is provided to manage it. Attempts could be made to divide the management of the system between different people or teams, for example by having "local" system management, such as by department of a company. However, such system management loses the benefit of centralised control, resulting in the possibility of inconsistent component management from one department to the next and possibly earlier or unpredictable failure of parts of the system.

Moreover, when dealing with IT security issues, such as implementing a patch to protect against a potential hacker attack, the time it takes to deploy the corrective patch is critical, this often being a race between the system manager and the hacker. In addition, the inability to track corrections in some systems adds to the risk of system failure.

It is known for equipment suppliers to provide tools aimed at managing the their equipment. Examples are those provided by Hewlett-Packard (*security_patch_check*), Microsoft (HFNETCHK), Sun Microsystems (SUNSOLVE PatchManager) and IBM (FixDisc). However, these systems tend to manage only the supplier's equipment and even then not always all the equipment offered by that supplier.

Other systems, known generally as vulnerability scanners, are known for detecting missing security patches intended to prevent access to a computer system by hackers. Although these systems are effective they only address one particular aspect of computer system management.

In addition, a patch management product under the name "Everguard" is available from Gibraltar software (www.gibraltarsoft.com). This product includes proprietary data collector agents that need to be deployed within an IT infrastructure and requires proprietary data transport mechanisms and subscription to a centrally managed service through which the patches are provided.

### Summary of the Present Invention:

The present invention seeks to provide apparatus for and a method for assisting in providing a managed support service for electronic devices, for example for implementation in a pre-existing heterogeneous IT infrastructure.

According to an aspect of the present invention, there is provided a component management tool for use in providing a managed support service for a system of electronic devices, the tool comprising:
a first data mapping element for receiving component data relating to the identities of components of the system of different types in a plurality of forms and storing such component data in a common format in a storage device,
a second data mapping element for receiving data relating to recommended component modifications in a plurality of forms and storing such modification data in a common format in a storage device,
comparison logic for comparing the component data with the component recommendations and to determine from the result of the comparison whether any of the identified components in the system have any identified recommended modifications; and
a reporting unit operable to provide the results of the determination to a client.

Preferably, a suggested component modification can include at least one of correction of a component defect, and software and firmware updates.

Advantageously, the step of collecting data relating to component modifications collects data from a plurality of sources.

The tool enables a system administrator to have knowledge of problems with components of the system automatically, without the need to carry out any manual or separate comparison process. Control of system management becomes possible for larger systems and can be kept centralised.

In the preferred embodiment, the automatic collection of component identity data is carried out regularly, such as in a time regular manner and/or in an event regular manner. In the latter case, the automatic collection of component identity data can be carried out when at least one of a new recommended component modification is identified and a change in the components of the system is identified. The choice as to whether collection of component data should be regular, and if so on what basis, can be left to the system administrator or to the service provider. Typically, time regular collection of data can be scheduled at convenient times, for example, to balance system usage. However, time regular collection of data can lack the immediacy in response of event based collection. In some embodiments, a combination of time and event collection could be used.

In the preferred embodiment, the step of collecting component data collects data of components of different types.

Preferably, the tool provides for assisting in the correction of defects, for example by providing links to web sites where software or firmware downloads can be obtained or by providing the correction software or firmware itself. The latter option, of course, would require a large memory capacity.

Advantageously, the system administrator is provided with the option to implement a correction or update to a component. In some instances a correction might not be desired at that point in time or at all.

Advantageously, the method allows a comprehensive and centralized supervision and reporting. It avoids local checking on each individual component.

The tool preferably provides for tracking the history of actions taken by a system administrator in response to notified defects in components of the system. This history can be valuable to a service provider and for the system administrator in determining the integrity of the system in relation to published recommended modifications and therefore the risks of system failure due to lack of corrective action having been taken.

In another aspect, the invention provides a method of providing a managed support service for a system of electronic devices including the steps of:
collecting substantially automatically component data relating to the identities of components of the system, including a first data mapping for converting receiving component data relating to the identities of components of the system of different types in a plurality of forms and storing such component data in a common format,
collecting data relating to recommended component modifications;
comparing automatically the collected component data with the collected component recommendations, including a second data mapping for converting data relating to recommended component modifications in a plurality of forms and storing such modification data in a common format,
determining from the result of the comparison whether any of the identified components in the system have any identified recommended modifications; and
providing the results of the determination to a client.

### Description of the Drawings:

Embodiments of the present invention are described below, by way of example only, with reference to the accompanying drawings, in which:
Figure 1 is a schematic diagram of an embodiment of component management system; and
Figure 2 is a flow chart of a preferred embodiment of component management routine.

### Description of the Preferred Embodiment:

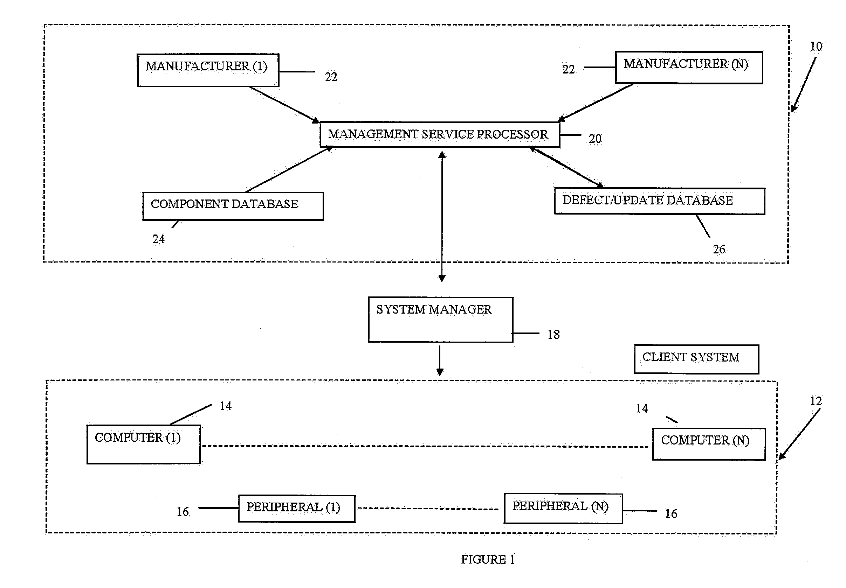

Referring to Figure 1, there is shown an embodiment of a component management service 10 intended to provide component management for a client system 12. In this example, the client system includes a plurality of computers 14 and a plurality of peripheral devices 16. Typically, each computer 14 is itself formed by a plurality of components, including hardware components and firmware and software components. The computers 14 may each be constituted differently. Similarly, each peripheral device 16 may be formed of a plurality of components, including hardware, firmware and software.

Although Figure 1 shows a computer system, the component management system disclosed herein could be used to manage other types of electronic components, not just computers and computer systems.

In the example shown in Figure 1, the client system 12 is of a size and complexity which justifies a system manager 18, which may be a person or department responsible for managing the system on a day-to-day basis. In the case of a computer system, the system manager 18 will typically be an IT specialist or IT department.

It is envisaged that the client system 12 could be very complex and geographically distributed, formed of a large number of components and of components of diverse types. The system could, for example, be formed of thousands, tens of thousands of even hundreds of thousands of components.

In order to ensure that the components 14, 16 of the system 12 remain operational, it is important for the system manager 18 to correct any defects in any of the components brought to its attention and to carry out any required software and firmware updates as and when necessary. Information regarding any such defects or updates is typically provided by the manufacturers and/or by third party sources.

The component management service 10 shown in Figure 1 is designed to collect together information regarding any corrections of defects or updates of components and to assist the system manager 18 in identifying whether any notified corrections of defects or updates are relevant to the client system 12. For this purpose, the service 10 includes a software tool 20 that will be referred to as a management service processor set up to communicate with a plurality of manufacturers 22 and/or other trusted third party sources using a corresponding variety of data formats. These could, for example, be via web sites or other servers provided by the manufacturers 22.

It is envisaged in some embodiments that the management service processor 20 will be set up to verify the authenticity of notifications of defects or updates provided by third party sources. Suitable authenticity checking procedures are known in the art so are not described in detail herein.

The service 10 also employs a component database 24 in which details of the components 14, 16 of a client system 12 are stored. A defect/update database 26 stores details of corrections for defects and updates obtained from manufacturers 22 and third party sources by the management service processor 20. The database 26 associates the defect/updates with a particular component, that is component type, version, batch number and so on. It will be understood that the database functionality represented as 24 and 26 may be implemented in many different ways and may be external, remote and/or distributed.

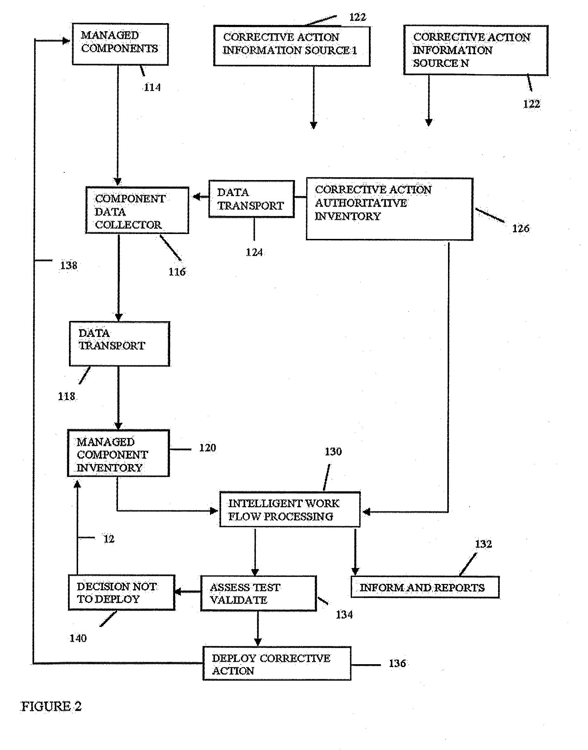

Referring now to Figure 2, there is shown a flow chart of the preferred embodiment of a component management process.

At step 122 information is gathered by the management service processor 20 from the manufacturers 22 and/or other trusted third party sources. That information includes data relating to a defect or update, the type of component affected by the defect or update and the corrective action which is required. Typically, this is provided when a manufacturer 22 has detected a defect in the product or components of a product and is recommending corrective action. The corrective action could, in the computer context, include patches, patch bundles, mitigation measures or service packs provided by the manufacturer 22 or by trusted third party sources. The corrective action provided with the data collected from the information source could include the correction itself (such as the software patch) or a link to the correction. The advantage of the former option is that the correction is provided directly and therefore for immediate access by the system management team but requires more memory capacity. The advantage of the latter option is that it is merely necessary to store the link to the correction, therefore requiring less memory capacity but with the disadvantage of needing to obtain the correction from a remote site.

At step 126 the management service processor 20 produces a corrective action authoritative inventory which is stored in the database 26. In the preferred embodiment, the inventory is a comprehensive structured list of known problems and corrective measures based on the information obtained from the corrective action information sources 22 and is stored in the database 26 with data identifying the specific type of component associated with the corrective action required, including, for example, component version, component serial number, component batch number and so on.

On the other hand, at steps 114 and 116 the method provides for collecting data on the types of components 14,16 forming the client system 12. The data collected is preferably equivalent to the data obtained from the corrective action information sources in step 122, that is including type of component, version, serial number, batch number and so on.

The step 116 of collecting component data preferably uses such component data collectors as are provided by many component manufacturers within the components themselves. These collectors are tools and routines which are intended to allow the timely collection of up-to-date, granular information describing the component 14, 16. In a computer environment, the data collector is normally based upon a plurality of items of code with provide information on the computer model, the type of central processing unit provided, what memory is available, details of the disk drives and all installed firmware, software and applications run on the computer. Some data collectors report inventory information on the components only, whereas it is known to have more sophisticated data collectors which are able to diagnose the presence of a defect within one of the components.

Where a component 14, 16 is not provided with a component data collector tool, it is envisaged that the system manager 18 would enter data relating to that component, obtained from the component itself, from materials supplied with the component or from data supplied separately by the manufacturer, for example following a request made to the manufacturer by the system manager 18. It is also envisaged that the system manager might create their own data collector from the data supplied by the manufacturer. The data on any such component would be stored in a separate memory provided in the apparatus used by the system manager 18 and be accessed during the data collection step 116.

At step 118 the data collected from all of the components 14, 16 of the system 12 is then transferred to the management service 10 and stored in the component database 24, in a record specific to that client 12. The record in database 24 would contain a structured list of all of the components in the system 12 and of the collected data.

Any suitable data transport mechanism can be used transporting the collected data to the management service 10, one example being via the Internet.

The system is generic in the sense that it is not dependant upon any particular format of data being provided and can rely upon the component data collector provided by the component manufacturer, where this is so provided. Where a specific format of data is provided by a manufacturer, this could be correlated both from the components 14, 16 in the system 12 and from the defect or update data provided by the manufacturer 22. Where there is no such direct correlation, it is envisaged that data mapping would be provided to take into account different data formats. A skilled person will readily be able to devise suitable data mapping, which would typically be implemented in the intelligent work flow processing step 130. It is envisaged that such a data mapping function could be implemented as an entry function of the various repositories used so that it can be used many times for many different client systems.

At step 130 the management service 10 carries out an intelligent work flow processing routine which is intended to carry out either continuously or on a regular basis a comparison between the data stored in the defect/update database 26 collected in the corrective action authoritative inventory 126 and the obtained managed component inventory 120 stored in the component database 24. The comparison identifies whether any components of the system 12 match the components which have been identified in step 126 as having defects or requiring updates.

The comparison process is preferably carried out on a regular basis. As to how this is set up in practice, this is a choice for the skilled person as it is envisaged that different levels of service can be provided for different clients. In one example, a comparison could be carried out on the basis of detection of events, whether it be notification of any new defect/updates from the manufacturers 22 or other trusted sources or upon the detection of any changes in the component set up in the client system 12. Additionally or alternatively, the comparison could be carried out on a time regular basis, for example once per day, once per week, once per month, at the option of the client. The comparison should be carried out preferably sufficiently regularly to maintain a level of information necessary to initiate and track defects and updates and to allow the implementation of corrective action by the system manager 18 prior to any such defects causing a problem in the client system 12.

The intelligent work flow processing step 130 includes several other features, described below in further detail.

The result of the comparison carried out at step 130 is notified to the system manager 18 at step 132 in one or more reports of suitable format. It is envisaged that the reports provided to the system manager 18 at step 132 would include details of which component or components are effected by the identified defects or updates, what potential problems could occur if each defect or update is not implemented and assistance as to how to correct the defect or implement the update. This assistance could be achieved by providing a simple command for the system manager 18 which would then allow correction of the defect or provision of the update by the management service 10 through a communications link provided through the system manager 18 to the relevant component 14,16 of the system 12 or by any other telecommunications link between the management service 10 and components of the client system 12.

At step 134 the system manager 18 is enabled to assess, test and validate a defect and the proposed correction and also for any notified update. In the assessment part of this step the system manager 18 can determine the seriousness of the defect and the effect of failure to correct the defect or to implement the update, in order to determine whether the current condition of the component in question is acceptable. This is useful because there may be instances in which a defect might not adversely affect a component of the client's system 12 because of the particular way that component 14, 16 is used in the client system 12.

The assessment part of this step 134 also enables the system manager 18 to determine the effect of implementing the correction or update. Of course, in some instances, it may not be appropriate to correct defects or implement an update because of the effect which this change may have on other components within the system 12. For example, a "correction" may adversely affect the operation of other components within the system.

In the case where the system manager 18 considers it appropriate to implement the correction of a defect or a firmware or software update, step 134 provides for the system manager 18 to test the effect of that implementation and to validate this before deploying the corrective action.

If the results of the assessment, test and validation step 134 are positive and the system manager 18 decides to implement the correction or update, at step 136 the system manager 18 requests deployment of the corrective action, for example by accepting an appropriate action option given in the information and reporting step 132 by the manager service 10. The correction or update can then obtained directly from the corrective action information source 122 or via the management service 10, in dependence upon how the system is implemented. Deployment of the corrective action will, of course, change the make-up of the managed components 14, 16 in the system 12 and therefore the routine provides for looping back 138 to the data collection step 116 in order to update the managed component inventory 120.

It is preferred that the intelligent work flow processing step 130 provides for monitoring of the corrective actions taken by the system manager 18 in response to notified defects or updates. In this regard, step 130 can include a sub-step of comparing the new managed component inventory 120 with the previous management component inventory 120 obtained prior to notification of a defect or update to determine whether the corrective action has been taken. It may also provide a step 140 of requiring the system manager 18 to specify when he/she has decided not to deploy the corrective action, with the result of that decision being stored in the managed component inventory 120, that is in the component database 24 alongside the particular component data. This allows the management service 10 to know whether the required corrective action has been taken and to obtain an indication as to the quality of management of the client system 12 by the system manager 18. This can assist not only when yet new defects are detected in components but also in determining the risk of failure of the client system 12 because defects have not been corrected or updates implemented.

Of course, it may take some time for the system manager 18 to deploy the corrective action and it is therefore envisaged that the intelligent work flow processing step 130 will take that time lag into account, for example by allowing repeated notification of a defect to be deferred temporarily.

It is also envisaged that the intelligent work flow processing step 130 would have the ability to report on different aspects of the client system 12, such as the health of the components 14, 16 and information as to how quickly a known problem is corrected, either of individual components of the system 12 or of particular groups of components (for example by data centre, by country or other geographical location).

As explained above, each of the routines for updating the managed component inventory 120 and corrective action authoritative inventory 126 is carried out, preferably, on a regular basis, being time regular or event-based. It can also be carried out on a continuous basis, although this would require more processing capacity and constant communication with the client system 12 through the system manager 18. The level of updating can be determined on a case-by-case basis in dependence upon the requirements of the system manager 18 which could, of course, be related to the complexity of the system 12 and the resources of the system manager 18.

Figure 2 also shows an additional step 124 between the step 126 of forming the corrective action authoritative inventory and the component data collector step 116. Some manufacturers provide within their products software tools designed to collect data on products, such that from the tool within the product itself it can be determined whether that product is up-to-date. Examples of such tools include hfnetchk (by Microsoft), sccurity_patch_check (by HP). These data collection tools can, for example, compare the software patches within the component with a current list of software patches provided by the manufacturer 22 and to determine from the comparison whether any software patches have been replaced or whether any new patches have been provided, that is to provide an indication of the condition of that component. For this purpose, the method provides the additional step 124 of identifying within the corrective action authoritative inventory step 126 those components which are provided with such tools and to transport the data of those components directly to the component data collector tool of those components (through the same communications link mentioned above with respect to provision of defect corrections and updates). This is then used in the component data collector step 116 to provide within the record for that component stored in the management component inventory 120 the results of that comparison. No corrective action is taken at that stage, this being left within the control and responsibility of the system manager 18 at step 134.

The system described above can provide automatic collection of defect/update data from the manufacturers 122 or other third party sources, automatic comparison of that data with data relating to the components 14, 16 of a managed client system 12 and thus to assist the system manager 18 in the process of managing those components without over-burdening the system manager 18 with irrelevant data or unnecessary manual processing of such data. It can also enable the system manager 18 to be able to react quickly to any notified defects or updates and to implement the required corrective action rapidly, all while minimising the required actual human workload to achieve this.

Of course, the system can also provide for quick and easy tracking of any changes in the components making up the client system 12, for example when the client chooses to add, remove or replace a component. As data collection is automated, the managed component inventory 120 remains accurate and does not suffer the risk of human error.

The resultant effect of this system is to reduce the exposure to risk of any part of the client system 12 failing as a result of defects not being corrected in time, updates not being implemented and so on. This can be a significant advantage in complex client systems. It also enables the system manager 18 to prioritise a plurality of required corrective actions to ensure that the most damaging potential defects are duly corrected before less important defects.

It is envisaged that this system will provide a corrective action response time of only a few hours per thousand components, compared to a typical response time of 250 man hours per thousand components using prior art component management methods.

In some cases, such as firewalls, network equipment and appliances, the exact inventory data can only be collected remotely, blurring the boundary between the data collector and the data transport steps 116, 118.

Of course, there are cases where a single component may be provided with a plurality of data collectors (for example, one for hardware and firmware, one for the operating system, another for a database or back up tool and so on). Step 116 allows for multiple data collectors for each component.

The system also provides for correcting any defects which have occurred within the components 14, 16 themselves, such as by human errors.

## Claims

1. A component management tool (20) for use in providing a managed support service for a system (12) of electronic devices, the tool comprising:
a first data mapping element for receiving component data relating to the identities of components (14, 16) of the system of different types in a plurality of forms and storing such component data in a common format in a storage device (24),
a second data mapping element for receiving data relating to recommended component modifications in a plurality of forms and storing such modification data in a common format in a storage device (26),
comparison logic for comparing the component data with the component recommendations and to determine from the result of the comparison whether any of the identified components in the system have any identified recommended modifications; and
a reporting unit (132) operable to provide the results of the determination to a client.

2. A tool according to claim 1, wherein a recommended component modification can include at least one of correction of a component defect, and software and firmware updates.

3. A tool according to claim 1 or claim 2, operable to collect data relating to component modifications from a plurality of sources (22).

4. A tool according to any preceding claim, operable to collect data relating to component identity data regularly.

5. A tool according to claim 4, operable to collect data relating to component identity data in a time regular manner.

6. A tool according to claim 4 or claim 5, operable to collect data relating to component identity data in an event regular manner.

7. A tool according to claim 6, operable to collect data relating to component identity data when at least one of a new recommended component modification is identified and a change in the components of the system is identified.

8. A tool according to any preceding claim, comprising first and second databases (24, 26) respectively for the collected component identity data and recommended component modifications.

9. A tool according to any preceding claim, operable to store a history of actions taken by the system administrator (18) in response to notified defects in components of the system.

10. A tool as claimed in any preceding claim, wherein the client is a workflow management system.

11. A method of providing a managed support service for a system (12) of electronic devices including the steps of:
collecting (116) substantially automatically component data relating to the identities of components (14, 16) of the system, including a first data mapping for converting receiving component data relating to the identities of components (14, 16) of the system of different types in a plurality of forms and storing such component data in a common format,
collecting (126) data relating to recommended component modifications;
comparing (130) automatically the collected component data with the collected component recommendations, including a second data mapping for converting data relating to recommended component modifications in a plurality of forms and storing such modification data in a common format,
determining from the result of the comparison whether any of the identified components in the system have any identified recommended modifications; and
providing the results of the determination to a client.
